# EUROPEAN PATENT SPECIFICATION

(11) **EP 1 762 440 B1**
(45) Date of publication and mention of the grant of the patent: **05.03.2008**
(21) Application number: 06016112.2
(22) Date of filing: 02.08.2006
(51) Int. Cl.: B60R 21/00

(54) **Air bag module cover structure**
Abdeckungstruktur für ein Airbag-Modul
Structure de couvercle pour module d'airbag

(30) Priority: 08.09.2005 JP 2005260083
(43) Date of publication of application: 14.03.2007
(73) Proprietor: HONDA MOTOR CO., LTD., Tokyo 107-8556 (JP)
(72) Inventor: Horiuchi, Tadanori, Wako-shi Saitama, 351-0193 (JP); Kuroe, Takeshi, Wako-shi Saitama, 351-0193 (JP); Iijima, Satoshi, Wako-shi Saitama, 351-0193 (JP)
(74) Representative: Rupp, Christian

(56) References cited:
- US-A- 6 007 090
- US-A- 6 113 133
- US-A1- 2005 023 803

## Description

The present invention relates to an air bag module cover structure, particularly to an air bag module cover structure suited to use for a motorcycle.

Hitherto, various contrivances have been investigated for applying to a motorcycle an air bag for effectively holding a rider (passenger) when an excessive level of shock is exerted on a vehicle body. In general, a roughly box-like air bag module integrally containing therein a folded air bag together with an inflator for inflating and developing the air bag and the like has a configuration in which the surface(s) of an air bag module cover as a predetermined development surface(s) is provided with a tear line as a brittle portion. At the time of inflation and development of the air bag, the pressure inside the air bag is raised by a gas generated from the inflator, whereby the tear line is ruptured and the air bag is developed. The tear line is required to have such a brittleness as to be appropriately ruptured at the time of inflation and development of the air bag and, simultaneously, to have such an appropriate strength as not to be deformed or ruptured when touched by the rider (passenger) or the like.

Patent Document 1 discloses a configuration of an air bag module cover for application to an assistant driver's seat air bag system in a four-wheel vehicle, wherein a tear line formed across a development surface(s) is in the shape of a single arc. According to this air bag module cover, even when the tear line and the surrounding portion are pushed by the passenger or the like, the pushing force is dispersed to the arc-shaped peripheral portions, so that the tear line and the surrounding portion are enhanced in rigidity and are less liable to be depressed. In addition, both end portions of the first tear line in an arcuate shape are orthogonally intersecting with rectilinear second tear lines, so that, at the time of inflation and development of the air bag, the force exerted on the tear line is transmitted evenly, and smooth development of the air bag is realized.

On the other hand, Patent Document 2 discloses a tear line structure formed in an air bag module cover for a four-wheel vehicle air bag system. In this tear line structure, an anti-leaking member provided for preventing a foamable resin of a foamable resin layer from flowing from a development portion into the air bag side, at the time of forming a perforation having a predetermined depth from the back side of the air bag module cover by laser processing, is removed only at the portion on the tear line, so that non-evenness of rupture of the tear line due to the anti-leaking member is obviated, and smooth development of the air bag is realized.
[Patent Document 1]
   Japanese Patent Laid-open No. 2005-162033
[Patent Document 2]
   Japanese Patent Laid-open No. 2003-212075

In general, the air bag module as above-mentioned is disposed in the vehicle in the condition where no obstacle is present between the air bag module and the passenger. Therefore, when the air bag module is installed on a motorcycle, the surface of the air bag module cover which is provided with a tear line is necessarily placed in an outdoor environment much different from the compartment environment in the case of a four-wheel vehicle. Accordingly, the tear line is not only put under influences of direct sunlight, winds, and rains but also highly possibly touched by the rider's hand when the rider gets on or gets off the motorcycle or pushed due to other external factor such as mischief. If the tear line should be damaged due to such a factor, the damage would possibly influence the inflating and developing action of the air bag.

The technologies disclosed in Patent Documents 1 and 2 are both presumed to be applied in the compartment of a four-wheel vehicle, and the references do not contain any suggestion or consideration as to the problems in applying the air bag module to a motorcycle as above-mentioned.

Patent document US 6,007,090 A shows an air bag device for a motorcycle corresponding to the preamble of claim 1 and 2 comprising a cover portion being connected to a receptacle portion by a hinge portion. The hinge portion is provided on one side of the cover portion. The remaining sides of the cover portion are sealed to surrounding structures by a fragile portion. The fragile portion bursts easily when an impact force larger than a predetermined value is applied to the cover portion. After the fragile portion bursts, the cover portion opens upwardly, with the hinge portion acting as a fulcrum for the cover portion.

Patent document US 2005/0023803 A1 shows an air bag system for suppressing the transmission of vibrations from a vehicle body and an engine to an inflator in said air bag system. A lit has a vulnerable portion for allowing an easy brake of the lit upon inflation of the air bag, the vulnerable portion is located in the middle of said lit.

It is an object of the present invention to solve the above-mentioned problems involved in the prior art, and to provide an air bag module cover structure suited to use on a motorcycle.

This is achieved with a vehicle having the features of claim 1.
In order to attain the above object, the present invention is firstly characterized in that, in an air bag module cover structure applied to a roughly rectangular parallelopiped-shaped air bag module, of four side surfaces of the air bag module, the three side surfaces other than the side surface facing to the vehicle front side are provided with tear lines at upper portions thereof.

In addition, the air bag module cover is developed toward the vehicle front side through rupture of the tear lines, and a stopper is provided on the vehicle front side of the air bag module cover.

Further, the present invention is secondly characterized in that the side surface facing to the vehicle rear side of the air bag module is provided with a slit portion through which to pass a support belt connecting an air bag and a vehicle body to each other, and the tear lines are provided respectively in the side surface facing to the vehicle rear side excluding the slit portion and in both the side surfaces facing in the vehicle width direction.

According to the invention as set forth in claim 1, there can be obtained an air bag module cover structure by which the toughness of the surface of the module cover against external factors can be markedly enhanced and which is suited to application to a motorcycle. In addition, even if a sticker is attached to the surface of the module cover or the surface is scratched, the inflation and development of the air bag will not thereby be influenced in any way. Further, the degree of freedom in designing the module cover surface can be enhanced.

Moreover, the air bag module cover can be developed to a predetermined angle.

According to the invention as set forth in claim 2, there can be obtained an air bag module cover structure in which the toughness of the module cover surface and the like can be enhanced, even in an air bag module having a support belt connecting the vehicle body and the air bag to each other.

Fig. 1 is a general illustration of a motorcycle according to one embodiment of the present invention.
Fig. 2 is an enlarged view of a motorcycle according to one embodiment of the present invention.
Fig. 3 is a perspective illustration of a motorcycle according to one embodiment of the present invention.
Fig. 4 is a perspective view illustrating a embodiment of the present invention.
Figs. 5(a) and 5(b) show a front view and a side view of an air bag module to which an air bag module cover structure according to one embodiment of the present invention is applied.
Figs. 6(a) and 6(b) show sectional views of an air bag module according to one embodiment of the present invention.

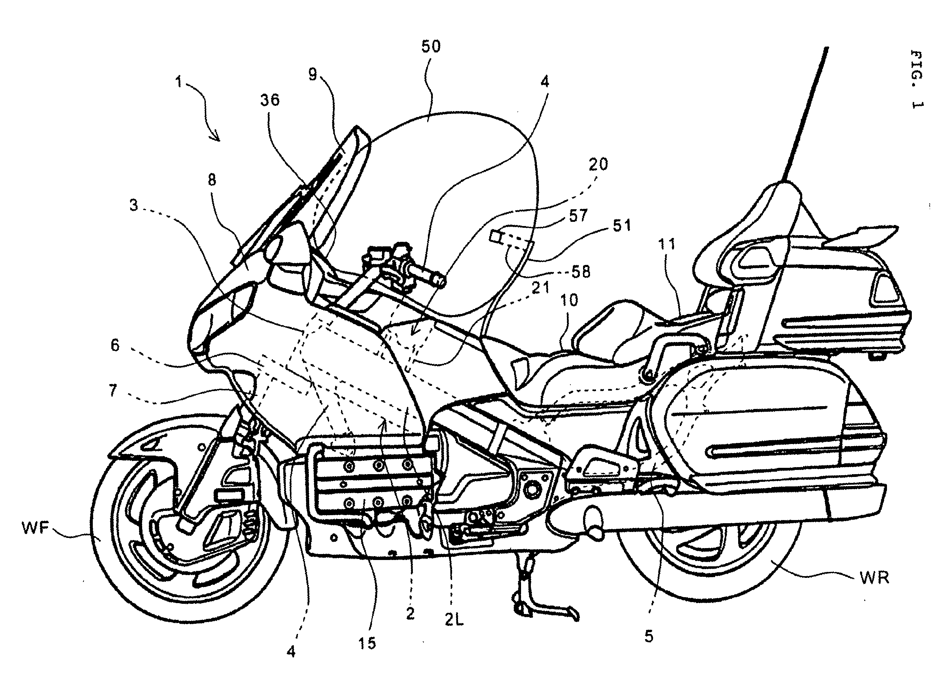

Now, a preferred embodiment of the present invention will be described in detail below referring to the drawings. Fig. 1 is a general illustration of a motorcycle 1 according to one embodiment of the present invention. A frame 2 of the motorcycle 1 is composed mainly of a left-right pair of upper tubes 2L and 2R (not shown) extending skewly downwards toward the vehicle body rear side from a head pipe 3. Lower tubes 4 are extended downwards from portions, in the vicinity of the head pipe 3, of the upper tubes 2L and 2R, and an engine 15 as a drive source is fixedly suspended from the tip ends of the lower tubes 4. A left-right pair of front forks 7 steerable by a steering handle 4 are turnably supported on the head pipe 3 through lower brackets 6, and a front wheel WF is rotatably supported on lower end portions of the front forks 7. In addition, a seat frame 5 for supporting a main seat 10, a rear seat 11, and the like is connected to the vehicle body rear side of the frame 2, and a rear wheel WR as a drive wheel is rotatably supported on a rear end portion of a swing arm (not shown) swingably connected to the frame 2.

The motorcycle 1 according to this embodiment is provided with an air bag 50 which, when an excessive shock is exerted on the vehicle body, is inflated and developed into a roughly spherical body so sized as to range from the upper side of the main seat 10 into the vicinity of a windscreen 9, which is provided at an upper end portion of an upper cowl 8, and to make contact with a meter case 36. An air bag module 20 integrally containing the air bag 50 and an inflator (not shown) for generating a gas for inflating and developing the air bag 50 is fixed to the upper tubes 2L and 2R by a support stay 21 at a position on the vehicle body front side relative to the seating position of the rider. Incidentally, support belts 51 connected to rear portions of the air bag 50 are for keeping the air bag 50 in an appropriate position at the time of holding the rider.

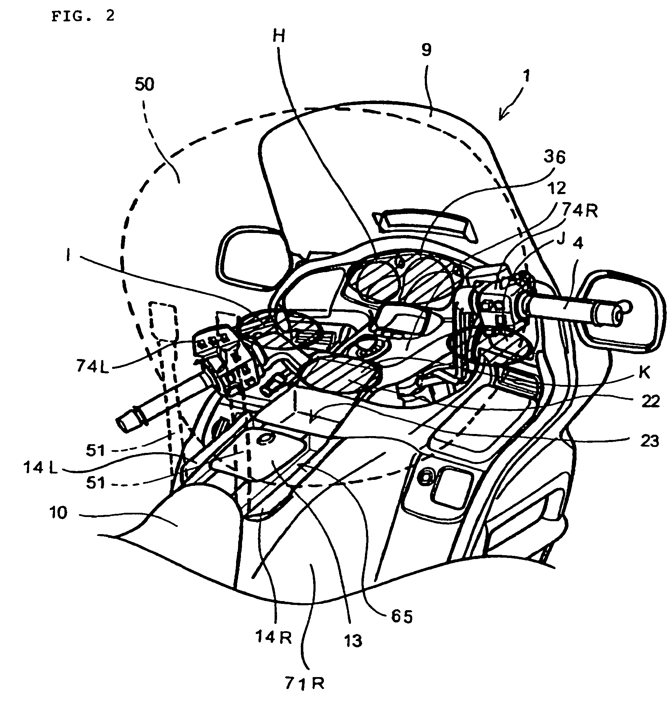

Fig. 2 is an enlarged view of a part of the motorcycle 1 according to one embodiment of the present invention. The same symbols as used above denote portions which are the same as or equivalent to the above-mentioned. The air bag module 20 (see Fig. 1) has a configuration in which the inflator and the air bag 50 in its folded state are contained in a box-shaped casing 23, and an upper portion thereof is covered with a module cover 22. The air bag module is disposed between an ignition cover 12 covering the upper side of a top bridge (not shown) connecting the steering handle 4 and the front forks 7 to each other and an oil feed port lid 13 located on the upper side of a fuel tank (not shown). At the time of inflation and development of the air bag 50, the gas generated by the inflator is instantaneously supplied into the air bag 50 inside the casing 23, and the pressure of the gas opens the module cover 22, with one side on the vehicle front side as an axis. An air bag module cover structure according to the present invention is applied to a tear line provided as a brittle portion between the module cover 22 and the casing 23.

In addition, the support belt 51 contained in a folded state in a containing space 65 under belt covers 14L and 14R at normal time is so configured that, upon inflation and development of the air bag 50, the support belts 51 are developed to the positions indicated by broken lines in the figure while forcibly opening the belt covers 14L and 14R to the left and right sides.

Incidentally, the steering handle 4 is steered to the left side in the figure, but at the time of inflation and development of the air bag 50, a front lower portion of the air bag 50 is stably supported by four portions, i.e., portion I in the vicinity of a left-side switch portion 74L and portion J in the vicinity of a right-side switch portion 74R in a neutral condition of the steering handle 4, plus portion H by the meter case 36 and portion K by the module cover 22. Incidentally, lower end portions of the support belts 51 are firmly fastened to a vehicle body side member on the lower side of the main seat 10 located on the upper side of a top shelter 71R.

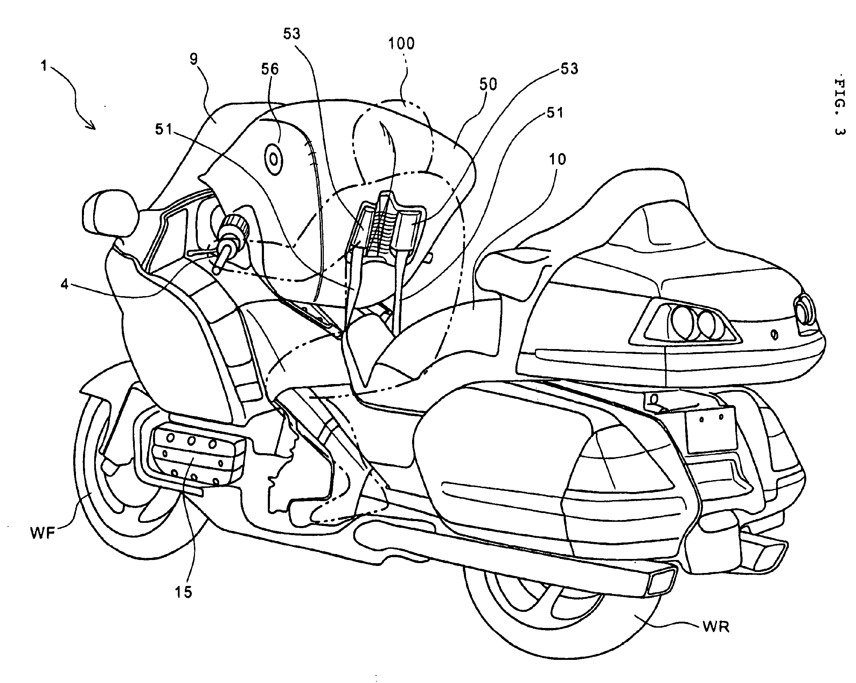

Fig. 3 is a perspective illustration of the motorcycle 1 at the time of inflation and development of the air bag 50. The air bag 50 is so configured that its surface on the rider's side becomes roughly V shaped upon inflation and development, for the purpose of effectively enveloping the rider. Further, the air bag 50 is so configured as to be supported not only by the support belts 51 but also by the whole of members located at a front lower portion of the air bag 50, such as the steering handle 4, the ignition cover 12, the meter cover 36, etc. In addition, the air bag 50 is provided in left and right surfaces of an upper portion thereof with vent holes 56 (for example, ϕ45) for discharging the gas at an appropriate rate while holding the rider.

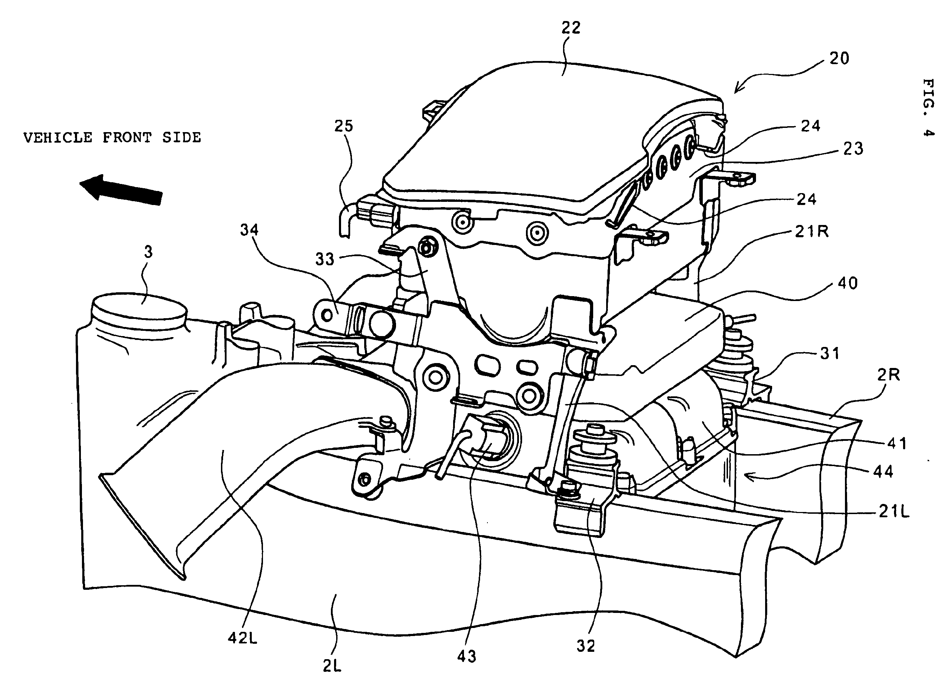

Fig. 4 is a perspective view illustrating a mounting structure of the air bag module 20. The same symbols as used above denote portions the same with or equivalent to the above-mentioned. A left-side support stay 21L and a right-side support stay 21R are fused to lower portions of the casing 23 of the air bag module 20, and are fixed by predetermined bolts to support members 30 (not shown), 31, 32 which are fused to the upper tubes 2L and 2R. A connector 25 provided on a side surface on the vehicle front side of the casing 23 is for inputting an ignition signal to the inflator contained in the casing 23.

An air cleaner box 44 for filtering the outside air to be introduced into the engine 15 and an upper cover 41 thereof are so disposed as to be clamped between the upper tubes 2L and 2R, and a roughly rectangular parallelopiped-shaped audio unit 40 is arranged on the upper side thereof. In addition, an FI unit support stay 34 for fixing a fuel injection control (FI) unit and a left-side air duct 42L for introducing the outside air into the air cleaner box 44 from the vehicle front side are fixed to a third support stay 33 disposed between the casing 23 and the upper tube 2L. Incidentally, a connector 43 for outputting a signal from an intake air temperature sensor disposed in the air cleaner box 44 is disposed at a side surface of the upper cover 41. A side surface on the rider's side of the casing 23 is provided with slits 24 as gaps for passing the support belts 51 therethrough.

According to the mounting structure of the air bag module 20 as above-described, the space generated on the lower side of the air bag module 20 for attaining an optimum layout of the air bag module 20 can be effectively utilized as a space for arranging other component parts, so that a reduction in the volume of the space for arranging the air bag module 20 is realized. In view of the mounting condition shown in the figure, by removing the FI unit support stay 34 and the third support stay 33, the audio unit 40 and the upper cover 41 are removed on the vehicle left side, without moving and removing the air bag module 20. Therefore, maintenance work such as replacement of an air filter (not shown) disposed in the air cleaner box 44 can also be carried out easily.

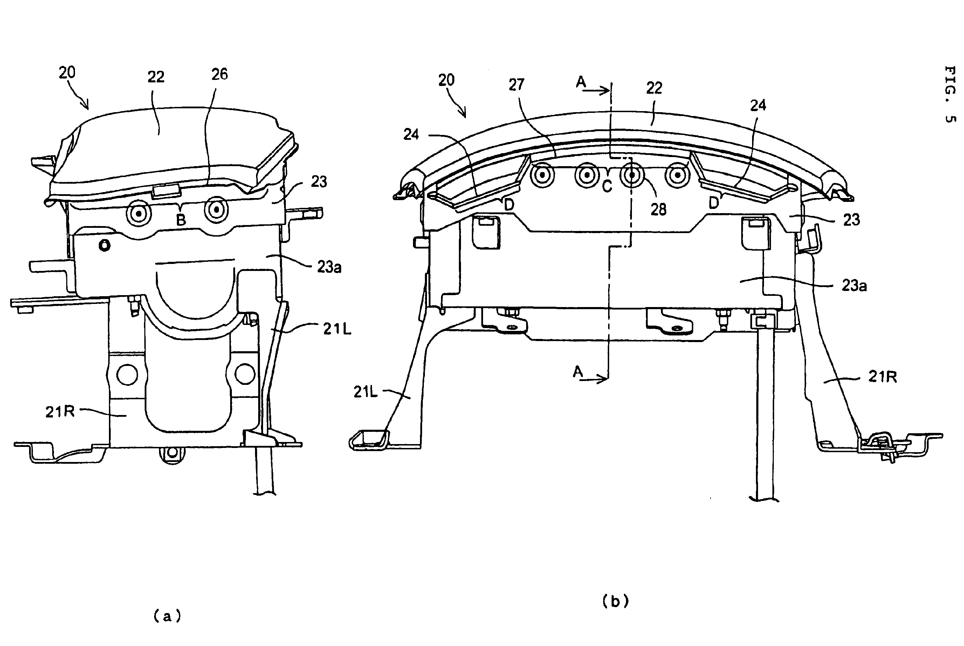

Fig. 5(a) is a side view of the air bag module 20, and Fig. 5(b) is a front view of the air bag module 20 as viewed from the rider's side. The same symbols as used above denote portions the same with or equivalent to the above-mentioned. The air bag module cover structure according to this embodiment is characterized in that tear lines as brittle portions are not provided in the surface of the module cover 22 but provided in side surfaces of an upper portion of the air bag module 20. In this embodiment, both side surfaces facing in the vehicle width direction are each provided with a first tear line 26 in portion B in the figure, and the front surface (facing to the vehicle rear side) as viewed from the rider's side is provided with a second tear line 27 in portion C in the figure other than portion D in the figure as the slit 24. Therefore, at the time of inflation and developing of the air bag 50, the roughly rectangular module cover 22 is developed in such a manner as to open a lid with one side on the vehicle front side as an axis, relative to the casing 23.

Incidentally, in this embodiment, the module cover 22 and the casing 23 are component parts which are integrally molded from a synthetic resin. A metallic lower-side casing 23a for containing the inflator and the like and the casing 23 are fastened to each other by a plurality of clips 28.

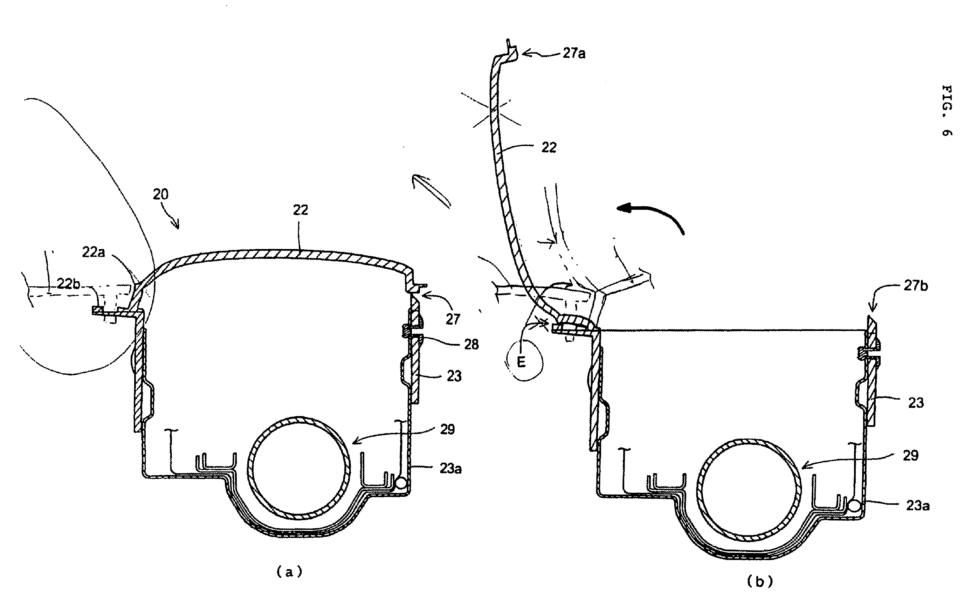

Figs. 6(a) and 6(b) are sectional views along line A-A of Fig. 5(b), in which Fig. 6(a) shows the condition at normal time, and Fig. 6(b) shows the condition when the air bag 50 is inflated and developed. The same symbols as used above denote portions the same with or equivalent to the above-mentioned. In Fig. 6(a), the inflator 29 for generating a gas for inflating and developing the air bag 50 is contained in the vicinity of a bottom portion of the lower-side casing 23a. The first tear lines 27 are each formed by imparting brittleness through molding in a small material thickness a boundary portion between the module cover 22 and the casing 23. Besides, at upper portions of the surface on the vehicle front side of the air bag module 20, projected stoppers 22a and 22b are formed over the whole width in the vehicle width direction.

At the time of inflation and development of the air bag 50 as shown in Fig. 6(b), the gas generated by the inflator 29 is instantaneously supplied into the air bag 50 stored in its folded state, and, due to the pressure of the gas, the module cover 22 is pushed up from the inside. By the pushing force or pressure, the second tear line 27 is ruptured while forming rupture surfaces 27a and 27b, which permits the air bag 50 to be inflated and developed to the upper side. In this instance, as a characteristic configuration in this embodiment, the stoppers 22a and 22b make contact with each other at portion E in the figure so as thereby to make it difficult for the module cover 22 to be opened further. According to the invention the module cover 22 can be developed to a predetermined angle.

As above-mentioned, according to the present invention, the tear lines as brittle portions are provided in the side surfaces of an upper portion of the air bag module, so that the toughness of the module cover surface against external factors can be markedly enhanced. For instance, even if a sticker is attached to the surface of the module cover or the surface is scratched, the inflation and development of the air bag will not thereby be influenced in any way; therefore, an air bag module cover suitable for application to a motorcycle can be obtained. In addition, since it is unnecessary to provide the module cover surface with a tear line, the degree of freedom in designing the module cover surface can be enhanced.

Incidentally, the shape, structure, number, and the like of the tear lines are not limited to those in the above-described embodiments, and can be modified variously. Besides, the air bag module cover structure according to the present invention can naturally be applied to other vehicles than motorcycles.

20 air bag module, 21R right-side support stay, 21L left-side support stay, 22 module cover, 23 casing, 23a lower-side casing, 24 slit, 26 first tear line, 27 second tear line, 28 clip.

## Claims

1. A vehicle with an air bag module cover structure applied to a roughly rectangular parallelopiped-shaped air bag module (20), wherein
of four side surfaces of said air bag module (20), the three side surfaces other than the side surface facing to the vehicle front side are provided with tear lines (26, 27) at upper portions thereof,
wherein said air bag module cover (22) is developed toward the vehicle front side through rupture of said tear lines (26, 27),
**characterized in that**
a stopper (22a, 22b) is provided on the vehicle front side of said air bag module cover (22).

2. The vehicle as set forth in claim 1, wherein the side surface facing to the vehicle rear side of said air bag module (20) is provided with a slit portion (24) through which to pass a support belt (51) connecting an air bag (50) and a vehicle body to each other, and said tear lines (26, 27) are provided respectively in the side surface facing to the vehicle rear side excluding said slit portion (24) and in both the side surfaces facing in the vehicle width direction.

## Patentansprüche

1. Fahrzeug mit einer Airbagmodul-Abdeckkonstruktion, die an einem ungefähr rechteckigquaderförmigen Airbagmodul (20) angebracht ist, wobei von vier Seitenflächen des Airbagmoduls (20) die drei Seitenflächen, die nicht die zur Fahrzeugvorderseite weisende Seitenfläche darstellen, mit Reißlinien (26, 27) an ihren oberen Abschnitten versehen sind, wobei die Airbagmodul-Abdeckung (22) durch Bruch der Reißlinien (26, 27) zur Fahrzeugvorderseite hin transportiert wird, **dadurch gekennzeichnet, dass** an der Fahrzeugvorderseite der Airbagmodul-Abdeckung (22) ein Stopper (22a, 22b) vorgesehen ist.

2. Fahrzeug nach Anspruch 1, wobei die zur Fahrzeugrückseite weisende Seitenfläche des Airbagmoduls (20) mit einem Schlitzabschnitt (24) versehen ist, durch den ein Halteriemen (51) zu führen ist, der einen Airbag (50) und einen Fahrzeugkörper miteinander verbindet, wobei die Reißlinien (26, 27) jeweils in der zur Fahrzeugrückseite weisenden Seitenfläche mit Ausnahme des Schlitzabschnitts (24) und in beiden in die Fahrzeugbreitenrichtung weisenden Seitenflächen vorgesehen sind.

## Revendications

1. Véhicule avec une structure de couvercle pour module de coussin gonflable appliquée à un module de coussin gonflable de forme parallélépipède approximativement rectangulaire (20), dans lequel des quatre surfaces latérales dudit module de coussin gonflable (20), les trois surfaces latérales autres que la surface latérale tournée vers le côté avant du véhicule sont dotées de lignes de déchirement (26, 27) sur leurs portions supérieures, dans lequel ledit couvercle pour module de coussin gonflable (22) est développé vers le côté avant du véhicule par la rupture desdites lignes de déchirement (26, 27),
**caractérisé en ce qu'**une pièce d'arrêt (22a, 22b) est prévue sur le côté avant du véhicule dudit couvercle pour module de coussin gonflable (22).

2. véhicule selon la revendication 1, dans lequel la surface latérale tournée vers le côté arrière du véhicule dudit module de coussin gonflable (20) est dotée d'une portion fendue (24) à travers laquelle passer une courroie de support (51) raccordant un coussin gonflable (50) et un corps de véhicule l'un à l'autre, et lesdites lignes de déchirement (26, 27) sont prévues respectivement dans la surface latérale tournée vers le côté arrière du véhicule excluant ladite portion fendue (24) et dans les deux surfaces latérales tournées dans le sens de la largeur du véhicule.
